# EUROPEAN PATENT SPECIFICATION

(11) **EP 2 924 247 B1**
(45) Date of publication and mention of the grant of the patent: **22.05.2019**
(21) Application number: 15160776.9
(22) Date of filing: 25.03.2015
(51) Int. Cl.: F01D 25/36, F02C 7/32, F02C 7/36

(54) **HYBRID DRIVE FOR GAS TURBINE ENGINE**
HYBRIDANTRIEB FÜR GASTURBINENMOTOR
ENTRAÎNEMENT HYBRIDE POUR MOTEUR À TURBINE À GAZ

(30) Priority: 27.03.2014 US 201461971085 P
(43) Date of publication of application: 30.09.2015
(73) Proprietor: United Technologies Corporation, Farmington, CT 06032 (US)
(72) Inventor: SHERIDAN, William G., Southington, CT Connecticut 06489 (US)
(74) Representative: Dehns

(56) References cited:
- EP-A2- 2 226 487
- US-A1- 2006 011 780
- US-A1- 2009 293 494

## Description

### BACKGROUND

This application relates to a gas turbine engine, wherein an electric motor may selectively drive a fan rotor at low power conditions of an associated aircraft.

Gas turbine engines are known and are often mounted on aircraft. In a known gas turbine engine, a fan delivers air into a core engine, and into a bypass housing as propulsion air. The air in the core housing passes to a compressor where it is compressed, and then delivered into a combustion section. The air is mixed with fuel in the combustion section and ignited. Products of this combustion pass downstream over a turbine rotor, driving the turbine rotor to rotate, and in turn drive the compressor and fan rotors.

In standard gas turbine engines, the engine is maintained operating throughout the entire flight of the associated aircraft. As known, the engine has high power conditions at take-off, and landing. The gas turbine engine would otherwise be shut down, saving fuel.

However, while the aircraft is in the air at cruise conditions, the power requirements are much lower. Thus, maintaining the engine operating throughout the entire flight results in an unnecessarily large amount of fuel consumed.

Recently it has been proposed to incorporate an electric motor to selectively drive the fan rotor, and in particular at cruise conditions. However, the proposed system has positioned the electric motor in the path of exhaust gas, and downstream of the turbine rotor. This is a very high temperature location, and results in challenges to maintaining the electric motor, and associated wires, etc., operational. Gas turbine engines having a fan drive turbine and an electric motor driving a fan rotor are disclosed in EP2226487 A2 and US2009/293494 A1.

### SUMMARY OF THE INVENTION

From a first aspect the invention provides a gas turbine engine as set forth in claim 1.

In an embodiment, of the above, the fan drive turbine drives a shaft extending through a core engine duct delivering air into a compressor rotor. The shaft drives a bevel gear to in turn drive the fan rotor.

In another embodiment according to any of the previous embodiments, the electric motor is positioned radially outwardly of the core engine duct.

In another embodiment according to any of the previous embodiments, the clutch is also positioned radially outwardly of the core engine duct.

In another embodiment according to any of the previous embodiments, the fan drive turbine rotor also drives a compressor rotor.

In another embodiment according to any of the previous embodiments, there are three turbine rotors. An upstream and intermediate turbine rotor each drive a compressor rotor. A downstream of the three turbine rotors is the fan drive turbine.

In another embodiment according to any of the previous embodiments, a control may open the clutch when an associated aircraft is at cruise altitude.

In another embodiment according to any of the previous embodiments, the motor is operated when the associated aircraft is at cruise altitude.

In another embodiment according to any of the previous embodiments, an axially outer location of the gas turbine engine is defined as the location of the fan rotor. The electric motor is positioned axially intermediate the fan rotor and the combustor.

In another embodiment according to any of the previous embodiments, the clutch is closed at least when the associated aircraft is at take-off conditions.

In another featured embodiment, a method of operating a gas turbine engine in accordance with the invention comprises the steps of driving the turbine rotor through the clutch to drive the fan rotor, driving the fan rotor with the clutch closed by the gas turbine engine when an associated aircraft is at a relatively high power condition, and opening the clutch, stopping operation of the gas turbine engine, and driving the fan rotor through the electric motor when the associated aircraft is at a low power condition.

These and other features of this application may be better understood from the following specification and drawings, the following of which is a brief description.

### BRIEF DESCRIPTION OF THE DRAWINGS

Figure 1A schematically shows a gas turbine engine.
Figure 1B shows an aircraft.
Figure 2 shows a second embodiment.
Figure 3 shows the Figure 1A engine in a low power operational mode.

### DETAILED DESCRIPTION

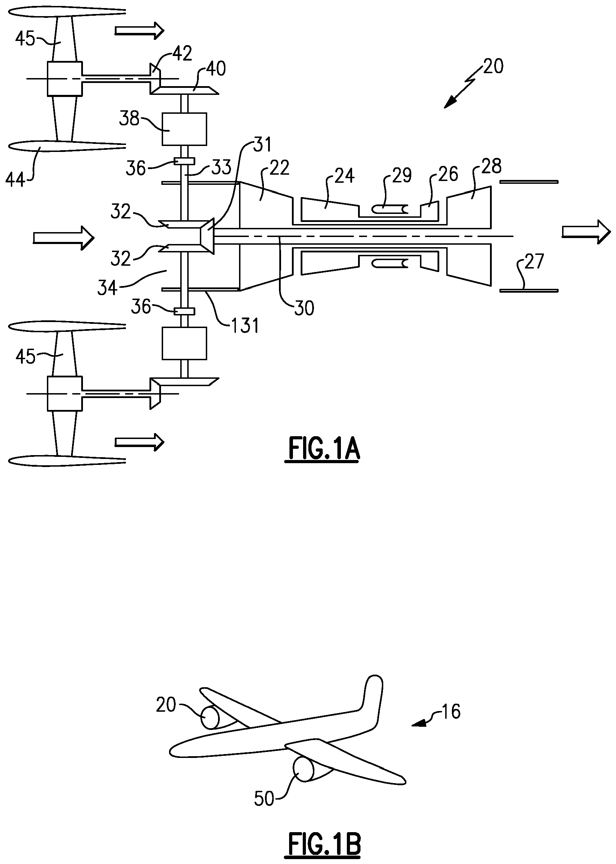

An engine 20 is illustrated in Figure 1A having an upstream or low pressure compressor rotor 22, and a downstream or high pressure compressor rotor 24.

A high pressure or upstream turbine rotor 26 drives compressor rotor 24. A downstream or low pressure turbine rotor 28 drives the compressor rotor 22. A combustion section 29 is positioned intermediate compressor rotor 24 and turbine rotor 26. As known, air is received from a core inlet 34, compressed across compressor rotors 22 and 24. That air is delivered into the combustion section 29 where it is mixed with fuel and ignited.

Products of this combustion pass downstream over turbine rotors 26 and 28, driving them to rotate. The product of this combustion then passes through an exhaust duct 27. As can be appreciated, products of the combustion in the exhaust duct 27 are very hot.

A shaft 30 is also driven by the downstream turbine rotor 28, and includes a gear 31 that drives bevel gears 32 to in turn drive a shaft 33 through a clutch 36. An electric motor 38 is positioned between the clutch 36 and a gear 40. Gear 40 engages a gear 42 to drive the fan rotor 45. Fan rotor 45 is driven within a bypass duct 44. In the illustrated embodiment, there are plural fan rotors driven by the shaft 30.

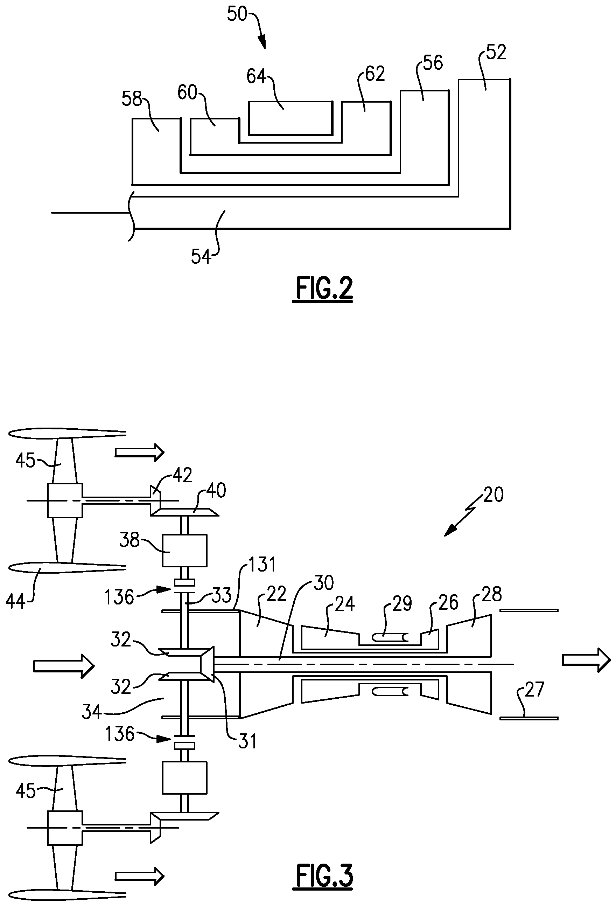

As shown in Figure 2, in another embodiment engine 50, there may be a compressor rotors 58 and 60 driven by turbine rotors 62 and 56, similar to the Figure 1 embodiment. Again, a combustion section 64 provides products of combustion to drive the turbine rotors 62 and 56. However, in this embodiment, a third turbine rotor 52 drives a shaft 54 to in turn drive the fan rotors, such as fan rotor 45 as shown in Figure 1A. That is, shaft 54 drives a gear arrangement as shown in Figure 1A.

As shown in Figure 1B, an associated aircraft 16 may mount two engines, that may be either like engine 20 or 50. Of course, other numbers of engines may be used.

Figure 3 shows a low pressure condition for the Figure 1A engine. It should be understood that a similar operational strategy can be utilized with a Figure 2 type engine.

In addition, it should be understood that the gears 31 and 32 (or 40 and 42) may provide a gear reduction, such that the fan rotor 45 rotates at a slower speed than the compressor rotor 22, or the turbine rotor 28.

During high power conditions of an associated aircraft, the engine 20 (or 50) is operated, such that combustion occurs in the combustion section, and the turbine rotors 26 and 28 (or 62/56/52) are driven. However, once the associated aircraft 16 reaches a cruise condition, the required power is relatively low. Under such conditions the clutch 36 may be opened as shown at 136 in Figure 3. At this point, the electric motor 38 is operated to drive the fan rotors 45. Under such conditions, only the bypass propulsion air provided by the fan rotors 45 will be driving the aircraft 16.

Once the aircraft 16 approaches landing conditions, the engine 20 (or 50) may be restarted, the clutch 36 closed, and the motor 38 stopped.

Of course, the motor 38 could also supplement power to the fan while the engine is running. It should be understood that the motor is constructed such that it passes rotation to gear 40 from shaft 30 even when motor 38 is shut down. However, by positioning the motor 38, and clutch 36, in a relatively low temperature location, the conditions that must be survived by these components are simplified compared to the proposed electric motor positioned in the path of hot products of combustion as in the prior art.

As can be appreciated from Figures 1A and Figure 3, one way of defining the location for motor 38 would be to say it is upstream of combustor 29, or axially outward of the combustor 29, with an axially forward position being defined by the location of the fan rotors 45. Another way of defining the location of the motors 38 is to say that they are positioned radially outward, defined by an axis of rotation of shaft 30, relative to a core engine housing 131. Another way of defining the location would be to say that the motor is not located in the path of the products of combustion. Stated another way, the electric motor 38 is positioned such that it is not downstream of a flow path relative to the fan driving turbine rotors 28 or 52.

An axially outer location of the gas turbine engine is defined as the location of the fan rotor. The electric motor is positioned axially intermediate the fan rotor and the combustor.

As can be appreciated, an appropriate motor controller, which may otherwise function as a full authority digital electronic controller (FADEC) may control the operation of the core engine and the fan. A worker of ordinary skill in the art would recognize how to provide such an appropriate control.

Thus, the system is much more easily maintained and operated than the proposed prior art system.

Although embodiments have been disclosed, a worker of ordinary skill in this art would recognize that certain modifications would come within the scope of this invention. For that reason the following claims should be studied to determine the scope and content of this invention.

## Claims

1. A gas turbine engine (20) comprising:
a fan drive turbine (28;52) for selectively driving a fan rotor (45);
a drive shaft (30;54) between said fan drive turbine (28;52) and a clutch (36); and
an electric motor (38);
said electric motor (38) being positioned such that it is not downstream of a flow path relative to said fan drive turbine (28;52) and is selectively operable to drive the fan rotor (45); **characterized in that**:
said electric motor (38) is constructed such that it passes rotation to said fan rotor (45) from said drive shaft (30; 54) even when said electric motor (38) is shut down.

2. A method of operating a gas turbine engine (20;50) as set forth in claim 1, comprising the steps of:
driving the turbine rotor (28;52) through the clutch (36) to drive the fan rotor (45);
driving said fan rotor (45) with said clutch (36) closed by said gas turbine engine (20;50) when an associated aircraft is at a relatively high power condition; and
opening said clutch (36), stopping operation of said gas turbine engine (20;50), and driving said fan rotor (45) through said electric motor (38) when the associated aircraft is at a low power condition.

3. The gas turbine engine or method as set forth in claim 1 or 2, wherein said fan drive turbine (28) drives a shaft (30) extending through a core engine duct (131) delivering air into a compressor rotor (22), and said shaft (30) driving a bevel gear (32) to in turn drive said fan rotor (45).

4. The gas turbine engine or method set forth in claim 3, wherein said electric motor (38) is positioned radially outwardly of said core engine duct (131).

5. The gas turbine engine or method as set forth in claim 4, wherein said clutch (36) is also positioned radially outwardly of said core engine duct (131).

6. The gas turbine engine or method as set forth in any preceding claim, wherein said fan drive turbine rotor (28) also drives a compressor rotor (22).

7. The gas turbine engine or method as set forth in any of claims 1 to 5, wherein there are three turbine rotors (52,56,62), wherein an upstream (62) and intermediate (56) turbine rotor each drive a compressor rotor (60,58), and a downstream (52) of said three turbine rotors being said fan drive turbine.

8. The gas turbine engine or method as set forth in any preceding claim, wherein a control may open said clutch (36) when an associated aircraft is at cruise altitude.

9. The gas turbine engine or method as set forth in claim 8, wherein said clutch (36) is closed at least when the associated aircraft is at take-off conditions.

10. The gas turbine engine or method as set forth in any preceding claim, wherein said motor (38) is operated when the associated aircraft is at cruise altitude.

11. The gas turbine engine or method as set forth in any preceding claim, wherein an axially outer location of said gas turbine engine (20;50) is defined as the location of said fan rotor (45), and said electric motor (38) being positioned axially intermediate said fan rotor (45) and a combustor (29).

12. The gas turbine engine or method as set forth in any preceding claim, comprising a plurality of fan rotors (45), said fan drive turbine (28; 52) driving said plurality of fan rotors (45) through a plurality of said clutches (36), each of said fan rotors (45) having an associated electric motor (38) .

13. The gas turbine engine or method as set forth in any preceding claim, wherein a shaft (30) is driven by said fan drive turbine rotor (28), and includes a gear (31) that drives bevel gears (32) to in turn drive a shaft (33) through said clutch (36), said electric motor (38) being positioned between said clutch (36) and a gear (40), which gear (40) engages a gear (42) to drive said fan rotor (45).

## Patentansprüche

1. Gasturbinenmotor (20), der Folgendes umfasst:
eine Lüfterantriebsturbine (28; 52) zum selektiven Antreiben eines Lüfterrotors (45);
eine Antriebswelle (30; 54) zwischen der Lüfterantriebsturbine (28; 52) und einer Kupplung (36); und
einen Elektromotor (38);
wobei der Elektromotor (38) derart positioniert ist, dass er sich nicht stromabwärts eines Strömungswegs relativ zu der Lüfterantriebsturbine (28; 52) befindet und selektiv wirksam ist, um den Lüfterrotor (45) anzutreiben; **dadurch gekennzeichnet, dass**:
der Elektromotor (38) derart aufgebaut ist, dass er eine Drehung von der Antriebswelle (30; 54) an den Lüfterrotor (45) weitergibt, selbst wenn der Elektromotor (38) abgeschaltet ist.

2. Verfahren zum Betreiben eines Gasturbinenmotors (20; 50) nach Anspruch 1, das die folgenden Schritte umfasst:
Antreiben des Turbinenrotors (28; 52) durch die Kupplung (36), um den Lüfterrotor (45) anzutreiben;
Antreiben des Lüfterrotors (45), wobei die Kupplung (36) durch den Gasturbinenmotor (20; 50) geschlossen ist, wenn ein damit assoziiertes Flugzeug sich in einem Zustand mit einer relativ hohen Leistung befindet; und
Öffnen der Kupplung (36), wodurch der Betrieb des Gasturbinenmotors (20; 50) unterbrochen wird, und Antreiben des Lüfterrotors (45) durch den Elektromotor (38), wenn das damit assoziierte Flugzeug sich in einem Zustand mit einer niedrigen Leistung befindet.

3. Gasturbinenmotor oder Verfahren nach Anspruch 1 oder 2, wobei die Lüfterantriebsturbine (28) eine Welle (30) antreibt, die sich durch einen Kernmotorluftkanal (131) erstreckt, der Luft in einen Verdichterrotor (22) liefert, und wobei die Welle (30) ein Kegelrad (32) dazu antreibt, im Gegenzug den Lüfterrotor (45) anzutreiben.

4. Gasturbinenmotor oder Verfahren nach Anspruch 3, wobei der Elektromotor (38) radial nach außen von dem Kernmotorluftkanal (131) positioniert ist.

5. Gasturbinenmotor oder Verfahren nach Anspruch 4, wobei die Kupplung (36) ebenfalls radial nach außen von dem Kernmotorluftkanal (131) positioniert ist.

6. Gasturbinenmotor oder Verfahren nach einem der vorhergehenden Ansprüche, wobei der Lüfterantriebsturbinenrotor (28) ebenfalls einen Verdichterrotor (22) antreibt.

7. Gasturbinenmotor oder Verfahren nach einem der Ansprüche 1 bis 5, wobei es drei Turbinenrotoren (52, 56, 62) gibt, wobei ein Stromaufwärts-(62)- und ein Zwischen-(56)-Turbinenrotor je einen Verdichterrotor (60; 58) antreiben und ein Stromabwärts-(52)-Turbinenrotor der drei Turbinenrotoren die Lüfterantriebsturbine ist.

8. Gasturbinenmotor oder Verfahren nach einem der vorhergehenden Ansprüche, wobei eine Steuerung die Kupplung (36) öffnen kann, wenn ein damit assoziiertes Flug sich in einer Reiseflughöhe befindet.

9. Gasturbinenmotor oder Verfahren nach Anspruch 8, wobei die Kupplung (36) geschlossen ist, wenn das damit assoziierte Flugzeug sich mindestens in einem Startzustand befindet.

10. Gasturbinenmotor oder Verfahren nach einem der vorhergehenden Ansprüche, wobei der Motor (38) betrieben wird, wenn das damit assoziierte Flugzeug sich in einer Reiseflughöhe befindet.

11. Gasturbinenmotor oder Verfahren nach einem der vorhergehenden Ansprüche, wobei ein axial äußerer Standort des Gasturbinenmotors (20; 50) als der Standort des Lüfterrotors (45) definiert ist und der Elektromotor (38) axial zwischen dem Lüfterrotor (45) und einer Brennkammer (29) positioniert ist.

12. Gasturbinenmotor oder Verfahren nach einem der vorhergehenden Ansprüche, umfassend eine Vielzahl von Lüfterrotoren (45), wobei die Lüfterantriebsturbine (28; 52) die Vielzahl von Lüfterrotoren (45) durch eine Vielzahl der Kupplungen (36) antreibt, wobei jeder der Lüfterrotoren (45) einen damit assoziierten Elektromotor (38) aufweist.

13. Gasturbinenmotor oder Verfahren nach einem der vorhergehenden Ansprüche, wobei eine Welle (30) durch den Lüfterantriebsturbinenrotor (28) angetrieben wird und ein Zahnrad (31) einschließt, das Kegelräder (32) dazu antriebt, im Gegenzug eine Welle (33) durch die Kupplung (36) anzutreiben, wobei der Elektromotor (38) zwischen der Kupplung (36) und dem Zahnrad (40) positioniert ist, wobei das Zahnrad (40) ein Zahnrad (42) in Eingriff nimmt, um den Lüfterrotor (45) anzutreiben.

## Revendications

1. Moteur à turbine à gaz (20) comprenant :
une turbine d'entraînement de soufflante (28 ; 52) pour entraîner sélectivement un rotor de soufflante (45) ;
un arbre d'entraînement (30 ; 54) entre ladite turbine d'entraînement de soufflante (28 ; 52) et un embrayage (36) ; et
un moteur électrique (38) ;
ledit moteur électrique (38) étant positionné de telle sorte qu'il n'est pas en aval d'un trajet d'écoulement par rapport à ladite turbine d'entraînement de soufflante (28 ; 52) et qu'il est utilisable sélectivement pour entraîner le rotor de soufflante (45) ; **caractérisé en ce que** :
ledit moteur électrique (38) est construit de telle sorte qu'il transmet une rotation audit rotor de soufflante (45) à partir dudit arbre d'entraînement (30 ; 54) même lorsque ledit moteur électrique (38) est arrêté.

2. Procédé de fonctionnement d'un moteur à turbine à gaz (20 ; 50) selon la revendication 1, comprenant les étapes consistant à :
entraîner le rotor de turbine (28 ; 52) par l'intermédiaire de l'embrayage (36) pour entraîner le rotor de soufflante (45) ;
entraîner ledit rotor de soufflante (45) avec ledit embrayage (36) fermé par ledit moteur à turbine à gaz (20 ; 50) lorsqu'un aéronef associé est dans une condition de relativement haute puissance ; et
ouvrir ledit embrayage (36), arrêter le fonctionnement dudit moteur à turbine à gaz (20 ; 50) et entraîner ledit rotor de soufflante (45) par l'intermédiaire dudit moteur électrique (38) lorsque l'aéronef associé est dans une condition de faible puissance.

3. Moteur à turbine à gaz ou procédé selon la revendication 1 ou 2, dans lequel ladite turbine d'entraînement de soufflante (28) entraîne un arbre (30) s'étendant à travers un conduit de moteur central (131) fournissant de l'air dans un rotor de compresseur (22), et ledit arbre (30) entraînant un engrenage conique (32) pour à son tour entraîner ledit rotor de soufflante (45).

4. Moteur à turbine à gaz ou procédé selon la revendication 3, dans lequel ledit moteur électrique (38) est positionné radialement vers l'extérieur dudit conduit de moteur central (131).

5. Moteur à turbine à gaz ou procédé selon la revendication 4, dans lequel ledit embrayage (36) est également positionné radialement vers l'extérieur dudit conduit de moteur central (131).

6. Moteur à turbine à gaz ou procédé selon une quelconque revendication précédente, dans lequel ledit rotor de turbine d'entraînement de soufflante (28) entraîne également un rotor de compresseur (22).

7. Moteur à turbine à gaz ou procédé selon l'une quelconque des revendications 1 à 5, dans lequel trois rotors de turbine (52, 56, 62) sont présents, dans lequel un rotor de turbine amont (62) et intermédiaire (56) entraînent chacun un rotor de compresseur (60, 58), et un rotor de turbine aval (52) desdits trois rotors de turbine étant ladite turbine d'entraînement de soufflante.

8. Moteur à turbine à gaz ou procédé selon une quelconque revendication précédente, dans lequel une commande peut ouvrir ledit embrayage (36) lorsqu'un aéronef associé est à l'altitude de croisière.

9. Moteur à turbine à gaz ou procédé selon la revendication 8, dans lequel ledit embrayage (36) est fermé au moins lorsque l'aéronef associé est dans des conditions de décollage.

10. Moteur à turbine à gaz ou procédé selon une quelconque revendication précédente, dans lequel ledit moteur (38) est mis en fonctionnement lorsque l'aéronef associé est à l'altitude de croisière.

11. Moteur à turbine à gaz ou procédé selon une quelconque revendication précédente, dans lequel un emplacement axialement externe dudit moteur à turbine à gaz (20 ; 50) est défini comme l'emplacement dudit rotor de soufflante (45), et ledit moteur électrique (38) étant positionné axialement entre ledit rotor de soufflante (45) et une chambre de combustion (29).

12. Moteur à turbine à gaz ou procédé selon une quelconque revendication précédente, comprenant une pluralité de rotors de soufflante (45), ladite turbine d'entraînement de soufflante (28 ; 52) entraînant ladite pluralité de rotors de soufflante (45) par l'intermédiaire d'une pluralité desdits embrayages (36), chacun desdits rotors de soufflante (45) ayant un moteur électrique associé (38).

13. Moteur à turbine à gaz ou procédé selon une quelconque revendication précédente, dans lequel un arbre (30) est entraîné par ledit rotor de turbine d'entraînement de soufflante (28), et comprend un engrenage (31) qui entraîne des engrenages coniques (32) pour à leur tour entraîner un arbre (33) par l'intermédiaire dudit embrayage (36), ledit moteur électrique (38) étant positionné entre ledit embrayage (36) et un engrenage (40), lequel engrenage (40) vient en prise avec un engrenage (42) pour entraîner ledit rotor de soufflante (45).
